# EUROPÄISCHE PATENTSCHRIFT

(11) **EP 0 510 400 B1**
(45) Veröffentlichungstag und Bekanntmachung des Hinweises auf die Patenterteilung: **22.02.1995**
(21) Anmeldenummer: 92105671.9
(22) Anmeldetag: 02.04.1992
(51) Int. Cl.: B23D 25/14, B23D 33/02, B21B 15/00

(54) **Trommelstanzschere**
Rotating drums shear
Cisaille rotative à tambours

(30) Priorität: 20.04.1991 DE 4112953
(43) Veröffentlichungstag der Anmeldung: 28.10.1992
(73) Patentinhaber: SMS SCHLOEMANN-SIEMAG AKTIENGESELLSCHAFT, 40237 Düsseldorf (DE)
(72) Erfinder: David, Siegfried, W-5912 Hilchenbach (DE)
(74) Vertreter: Valentin, Ekkehard, Dipl.-Ing.

(56) Entgegenhaltungen:
- DE-A- 2 204 266
- DE-C- 713 993
- FR-A- 2 144 173

## Beschreibung

Die Erfindung betrifft eine rotierende Schopf- und Probenahmeschere für Walzgut, insbesondere für Draht- und/oder Stabstahl-Walzstraßen mit hohen Walzgeschwindigkeiten für den Draht bzw. für den Stabstahl, mit rotierbar angeordneten, hohlzylindrisch ausgebildetem Messerträger mit einem Ringmesser, dessen Messerschneide mit der zylindrischen Wandung umläuft und mit einer von dem Messerträger beabstandeten, rotierbar angeordneten Messertrommel mit einem am Außenumfang angeordneten Ringmesser, dessen Messerschneide entlang der Trommelaußenwandung verläuft, wobei im Abstandsbereich zwischen Messerträger und Messertrommel das Walzgut geführt ist, und mit einer Verschiebeeinrichtung für Messerträger bzw. Messertrommel.

Aufgrund der Herstellungsverfahren von warmgewalztem schlanken Walzgut, wie Walzdraht oder Stabstahl treten inhärente Dimensionsfehler und andere fehlerhafte Stellen, insbesondere in den voreilenden Enden bzw. nacheilenden Enden des Walzgutes auf. Dementsprechend ist es notwendig, zwischen den Abschnitten der Walzstraße oder aber für das nachfolgende Kaltbearbeiten des Walzgutes die defekten Endstücke zu entfernen. Bei der Herstellung eines Walzdrahtes müssen die defekten Endstücke noch vor dem Fertigwalzblock abgetrennt werden, bzw. bevor der Walzdraht auf eine Wickeltrommel gewickelt wird, weil das Abscheren oder Abtrennen der Endstücke nach dem Aufwickeln des Drahtes auf die Trommel sich schwierig gestaltet und Zeit in Anspruch nimmt. Die Walzwerke zur Herstellung von Walzdraht enthalten hochentwickelte Anlagenkomponenten zur Wirtschaftlichkeit und Leistungsfähigkeit der Gesamtanlage. Eine der Voraussetzungen dafür ist eine hohe Walzgeschwindigkeit. Die Walzgeschwindigkeit in der Drahtfertigstraße, im sogenannten Morgan-Fertigblock, beträgt mehr als 100m/sec. Beim Ausnutzen der Reserven kann die Walzgeschwindigkeit bis zu 120 m/sec betragen. Die in der Walzstraße eingesetzten Schopf- und Trennscheren müssen also in der Lage sein, das Walzgut bei hohen Walzgeschwindigkeiten am vorlaufenden Ende bzw. am nachlaufenden Ende zu schopfen bzw. zur Probeentnahme zu trennen, oder auch Notschnitte bei Störungen durchzuführen. Hierzu sind verschiedene Scherenkonstruktionen bekanntgeworden.

In der europäischen Patentanmeldung mit der Veröffentlichungs-Nummer 0 256 371 A1 ist eine Anlauf- und Durchlauftrommelschere für hohe Drahtgeschwindigkeiten beschrieben. Die Trommelschere zum Schopfen des Walzdrahtes ist so gestaltet, daß sie um eine im Messerbereich liegende Vertikalachse schwenkbar ist, und daß eine vorgeordnete Weiche zur Führung des Walzdrahtes in sychronisierter Querbewegung innerhalb zweier Grenz-Schwenklagen verstellbar ist, in denen der Walzdraht außerhalb des Schnittbereichs der Schere verläuft. Die Messertrommeln können auf diese Weise vor dem Schnitt einige Umdrehungen durchführen, um die geforderten hohen Umfangsgeschwindigkeiten zu erreichen. Die Messertrommeln können allerdings auch im Durchlaufbetrieb umlaufen. Infolge des Verschwenkens der Weiche durchwandert bspw. das Vorderende eines Walzdrahtes den Schnittbereich der Schere, so daß ein Vorderschopf in einen zur Häckselschere führenden Ablenkkanal gelangt. Der nachfolgende Walzdraht wird durch die weitere Querbewegung der Weiche in den Kanal zum Fertiggerüst bzw. zum Windungsleger geführt. Der synchronisierte Stellantrieb für das Schwenken der Weiche besteht aus einem Kurbelantrieb kombiniert mit einem Nockenantrieb, durch den die Weiche sanft und ohne zu hohe Beschleunigung zum Schnitt umgesteuert werden kann. Diese Schere ermöglicht das Schopfen des Walzdrahtes an bestimmten Punkten und zu einer bestimmten Zeit mit hoher Genauigkeit und bei hohen Walzgeschwindigkeiten.

Aus der europäischen Patentanmeldung 0 259 600 A1 ist eine rotierende Schopf- und Probenschere für Draht-Walzstraßen mit zwei in Umlaufrichtung versetzt angeordneten Messerpaaren bekannt, wobei die Messer mit radial verlaufenden Schneiden in gegenüberliegende etwa plane Messerträger eingesetzt sind, die höhengleich unterhalb der Walzenachse gelagert sind. Die Trennschnitte erfolgen durch eine axiale Verschiebung eines Messerträgers, indem dieser gegenüber dem anderen Messerträger um einen spitzen Winkel von wenigen Graden zueinander geneigt wird. Wegen der geneigten Schneidposition der umlaufenden Messer kann ein Vorderschopf mit anschließendem Probestück oder ein Probestück allein oder ein Hinterschopf mit nachfolgendem Probestück seitlich in einen Probekanal ausgeworfen werden. Mit dieser Schere ist es also möglich, Probestücke an beliebigen Stellen eines schnellaufenden Walzgutes herauszuschneiden und einen Durchlaufbetrieb der Schere vorzunehmen.

Aus der deutschen Offenlegungsschrift 2 204 266 ist eine Kreisschere zum Schopfen von schnellaufendem Draht bekannt, die aus zwei in zueinander geneigten Ebenen umlaufenden beweglichen Schneidkörpern besteht. Die Schneidkörper sind zylindrisch ausgebildet und weisen an ihrem Umfang Ringmesser auf. Der eine Schneidkörper ist stationär angeordnet. Der andere Schneidkörper ist beweglich angeordnet. Der bewegliche Schneidkörper ist in Richtung seiner Umlaufachse verschiebbar in dem Kolben eines Arbeitszylinders angeordnet. Diese Kreisschere erfordert wegen der geneigten Schneidebenen einen erheblichen Platzbedarf; auch ist es schwierig, die Schneidkörper in einem Scherengehäuse unterzubringen. Ferner ist mit dieser Kreisschere ein gleichzeitiges Schopfen und Probenehmen nicht möglich.

Ausgehend von der Scherengattung gemaß der oben beschriebenen deutschen Offenlegungsschrift 2 204 266 ist es die Aufgabe der vorliegenden Erfindung, eine weitere Schere zum Schopfen bzw. zum Probenehmen von schnellaufendem Walzgut bspw. bis 100 m/sec zu schaffen mit beliebig aber exakt einstellbarem Schopflängenschnitt und vorgegebener Schnittlänge für ein Probenteil.

Die Lösung der Aufgabe zeichnet sich bei einem Scherengehäuse der zuvor beschriebenen Gattung dadurch aus, daß der Messerträger und die Messertrommel in einem Scherengehäuse angeordnet sind, daß die Rotationsebenen von Messerträger und Messertrommel zueinander parallel sind, daß der Messerträger hohlzylindrisch ausgebildet ist, daß der Außendurchmesser der Messertrommel geringfügig kleiner bemessen ist als der Innendurchmesser des hohlzylindrischen Messerträgers und daß die Messertrommel von der Verschiebeeinrichtung in den Hohlzylinder des Messerträgers bewegbar ist und daß der Hohlzylinder des Messerträgers mit einer Entnahmekammer für vom Walzgutstrang geschopfte Enden bzw. aus diesem herausgetrenntes Probegut in Verbindung steht. Mit Hilfe der kreisförmigen Messer wird bspw. erreicht, daß die Drehstellung der Messer beim Schnittbeginn beliebig sein kann. Da die Messertrommel von der Verschiebeeinrichtung in den Hohlzylinder des Messerträgers bewegbar ist, kann zwischen zwei Punkten einer durch das strangförmige Walzgut und durch die Ringmesser gebildete Sekante jede beliebige Länge eines Vorder- bzw. Hinterschopfes oder eine Probe herausgestanzt werden, die der Länge der Sekante entspricht oder es kann auch ein längeres Stück des strangförmigen Walzgutes geschopft werden, wobei zusätzlich ein Probestück in der Länge der Sekante anfällt. Der Messerträger und die Messertrommel können als Rotationskörper schnell auf solche Umfangsgeschwindigkeiten hochbeschleunigt werden oder auf solchen Umfangsgeschwindigkeiten gehalten werden, die der Walzgeschwindigkeit des Drahtes bzw. des Stabstahles unter Berücksichtigung der erforderlichen Voreilung entsprechen. Um die Messertrommel zum schnellen Schnitt in den hohlzylindrischen Messerträger zu bewegen, wird zweckmäßigerweise die Verschiebevorrichtung für die Messertrommel von einem hochenergetisch vorspannbaren Krafterzeuger bewegt, vorzugsweise von einem Hydraulik- bzw. Pneumatikzylinder mit Bewegungsdämpfung oder durch einen mechanisch wirkenden Kurbel- bzw Kniehebeltrieb.

Nach einer weiteren Ausgestaltung der Erfindung ist vorgesehen, daß Messerträger und Messertrommel mechanisch mittels eines Vorgeleges synchronisiert sind, dessen eines Ritzel in einer Außenverzahnung des Messerträgers und dessen anderes Ritzel mit einem Stirnrad kämmt, in dessen Nabe die Welle der Messertrommel drehfest aber axial verschieblich gehalten ist. Hierdurch ist in jedem Betriebszustand eine exakte Anpassung der Umfangsgeschwindigkeit der ringförmigen Schneidmesser an die Geschwindigkeit des Walzgutes möglich, indem bspw. die Geschwindigkeit des Walzgutes als Regelvorgabe für die Drehzahl des Vorgeleges genommen wird.

In Weiterbildung der Erfindung ist für das aus dem strangförmigen Walzgut herausgetrennte Probegut bzw. für die kurzen abgetrennten Schopfenden entweder in dem Scherengehäuse oder in dem rotierenden Messerträger eine Entnahmekammer für diese Teile angeordnet.

Weitere vorteilhafte Ausführungsmöglichkeiten für die Trommelstanzschere sind in anderen Patentansprüchen enthalten, bspw. für die Verbindung der Wellen von Messerträger und Messertrommel und deren Lagerung und Anordnung im Scherengehäuse sowie für eine automatisch wirkende Öffnungsklappe für die Entnahmekammer in dem rotierenden Messerträger.

Ein Ausführungsbeispiel für eine erfindungsgemäße Trommelstanzschere wird nachfolgend anhand von schematischen zumeist in Schnittdarstellung gezeigten Zeichnungen näher erläutert. Es zeigen:
- Figur 1: die Trommelstanzschere in Ruhestellung,
- Figur 2: die Trommelstanzschere in der Augenblicksstellung für den Schnittbeginn des Walzgutes,
- Figur 3: die Trommelstanzschere in der Augenblicksstellung für den Probenausstoß,
- Figur 4: eine Ansicht der Augenblicksstellung von Messerträger und Walzgut bei Schnittbeginn des Vorderschopfes,
- Figur 5: eine Ansicht der Augenblicksstellung von Messerträger und Walzgut bei Schnittende des Vorderschopfes,
- Figur 6: eine Ansicht der Augenblicksstellung von Messerträger und Walzgut bei Schnittbeginn des Hinterschopfes,
- Figur 7: eine Ansicht der Augenblicksstellung von Messerträger und Walzgut bei Schnittende des Hinterschopfes,
- Figur 8: die Trommelstanzschere mit im Messerträger integrierter Entnahmekammer für Probengut,
- Figur 9: einen Schnitt durch die Entnahmekammer entlang der Linie IX-IX in Figur 8 mit der Entnahmeklappe in einer Schließposition a.) und Öffnungsposition b.),
- Figur 10: einen Krafterzeuger für die Verschiebeeinrichtung der Trommelstanzschere mit Pneumatikzylinder und mechanischem Auslösemechanismus in einer Wartestellung a.) und einer Endstellung b.).

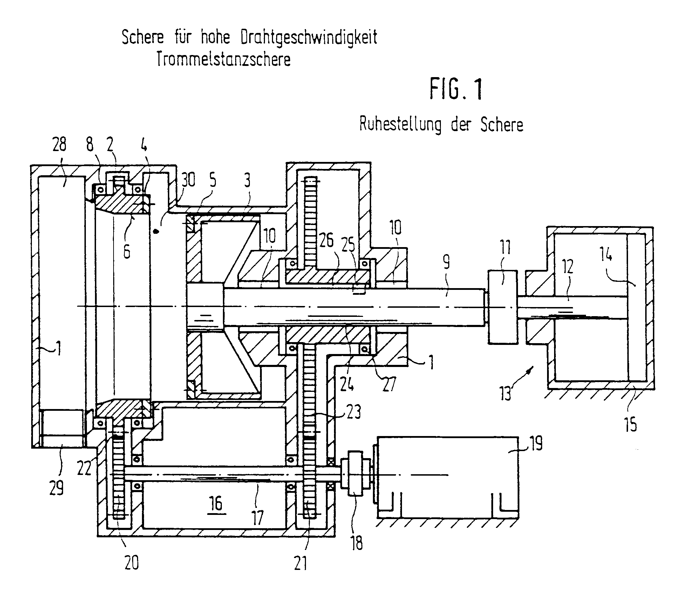

In Figur 1 ist die Trommelstanzschere für schnell laufenden Walzdraht oder Stabstahl schematisch in einer Schnittdarstellung gezeigt. In einem mehrteiligen Scherengehäuse 1 sind ein hohlzylindrisch ausgebildeter Messerträger 2 und eine Messertrommel 3 angeordnet. Der Messerträger 2 und die Messertrommel 3 sind mit Ringmessern 4, 5 ausgerüstet. Das Ringmesser 4 des Messerträgers 2 ist an einer Stirnseite des Messerträgers so befestigt, daß dessen Messerschneide an der hohlzylindrischen Wandung 6 des Messerträgers umläuft. Das Ringmesser 5 der Messertrommel 3 ist ebenfalls an einer Stirnseite der Messertrommel in deren Umfangsbereich angeordnet und zwar so, daß dessen Messerschneide entlang der Trommelaußenwandung 7 verläuft. Der Messerträger 2 ist im Scherengehäuse 1 in Radiallagern 8 rotierbar. In der gleichen Rotationsebene aber mit Abstand zum Messerträger 2 ist die Messertrommel 3 rotierbar. Im Abstandsbereich zwischen den rotierenden Ringmessern 4, 5 von Messerträger und Messertrommel ist der zu schopfende Walzdraht 30 zu erkennen. Die Messertrommel 3 ist auf einer Trommelwelle 9 fliegend angeordnet, die im Scherengehäuse in Gleitlagern 10 gelagert ist. Außerhalb des Scherengehäuses ist die Trommelwelle 9 in einem Axiallager 11 abgestützt, um die bei der Betätigung der Schere auftretenden Axialkräfte aufzufangen. Das Axiallager 11 ist mit der Kolbenstange 12 eines hydraulisch arbeitenden Krafterzeugers einer Verschiebeeinrichtung 13 verbunden, dessen bewegbarer Hydraulikkolben 14 in bekannter Weise in einem Hydraulikzylinder 15 angeordnet ist, der an einem Festpunkt bspw. dem Fundament abgestützt ist. Von dem Krafterzeuger der Verschiebeeinrichtung wird die Messertrommel 3 in axialer Richtung auf den Messerträger 2 hinbewegt; da der Außendurchmesser der Messertrommel 3 geringfügig kleiner bemessen ist, als der Innendurchmesser des hohlzylindrischen Messerträgers 2, ist die Messertrommel zur Durchführung des Walzguttrennschnittes bspw. zum Schopfen des Drahtanfangs, in den Hohlzylinder des Messerträgers bewegbar.

Zur Synchronisation der Rotation von Messerträger 2 und Messertrommel 3 bzw. zur Synchronisation der beiden Ringmesser 4, 5 sind Messerträger und Messertrommel mit Hilfe eines Vorgeleges 16 mechanisch verbunden, dessen Getriebewelle 17 in dem Scherengehäuse 1 gelagert ist, und welche über eine Kupplung 18 von einem außerhalb des Scherengehäuses angeordneten Antriebsmotor 19 angetrieben wird. Auf der Vorgelegewelle sind zwei Ritzel 20, 21 angeordnet, wobei das Ritzel 20 mit einer Außenverzahnung 22 des Messerträgers 2 getrieblich in Verbindung steht, und wobei das Ritzel 21 in ein Stirnrad 23 eingreift, welches die Messertrommel 3 mit der gleichen Drehzahl antreibt wie der Messerträger 2 dreht. Durch die Nabe 24 des Stirnrads 23 ist die Trommelwelle 9 geführt. Zur drehfesten aber axial verschiebbaren Verbindung des antreibenden Stirnrads 23 ist auf der Trommelwelle 9 ein Mitnahmekeil 25 befestigt, der in eine in der Stirnradnabe 24 längs bzw. axial verlaufenden Mitnahmenut 26 eingreift. Das Stirnrad 23 ist im Scherengehäuse 1 in Radiallagern 27 gehalten.

Im Scherengehäuse 1 ist ferner eine Entnahmekammer 28 für das geschopfte Walzgut bzw. für die aus dem Walzgutstrang herausgetrennte Probe vorgesehen, mit einer in üblicher Konstruktion ausgestalteten Entnahmeklappe 29.

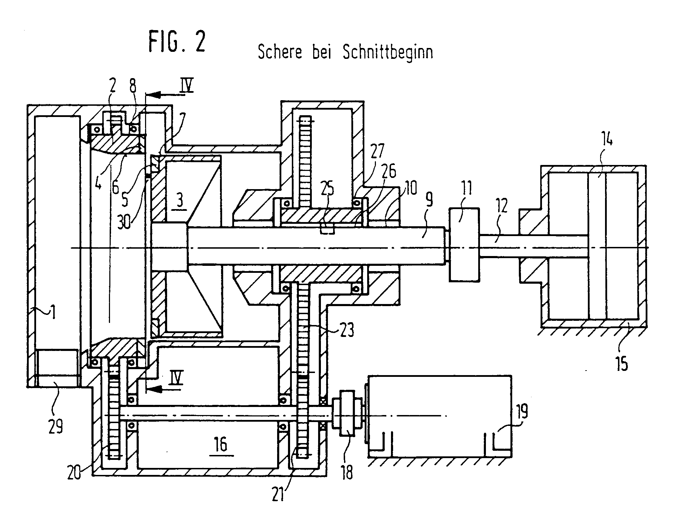

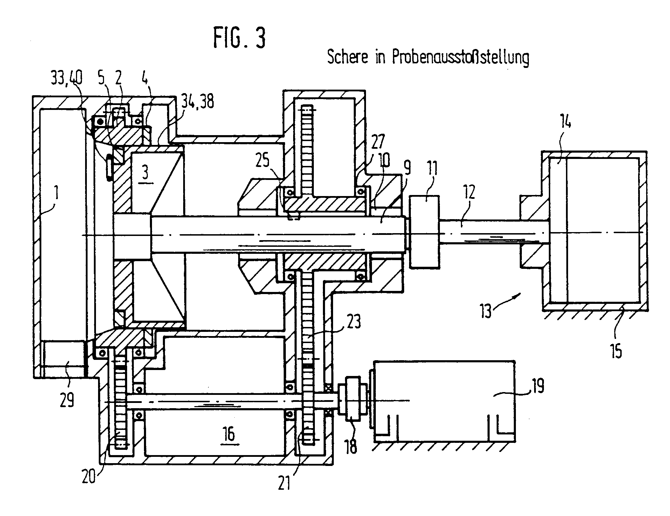

Figur 2 und Figur 3 zeigen die Trommelstanzschere in einer Arbeitsposition bei Schnittbeginn für das Walzgut bzw. den Walzdraht und in einer Arbeitsposition für den Ausstoß des Probegutes.

In Figur 2 ist deutlich erkennbar, daß die Messertrommel 3 von der Verschiebeeinrichtung 13 in die Rotationsebene des Messerträgers 2 bewegt worden ist, wodurch die Ringmesser 4, 5 bezogen auf das Walzgut in eine Schneidstellung gelangt sind. Erkennbar ist auch, daß die Trommelwelle 9 um den entsprechenden Verschiebeweg durch die Nabe 24 des Stirnrades 23 axial in Richtung auf den Messerträger 2 bewegt wurde, da die Lage des Mitnahmekeils 25 in der Mitnahmenut 26 um die gleiche Weglänge verändert ist. In Figur 3 ist erkennbar, daß die Messertrommel 3 in den hohlzylindrischen Teil des Messerträgers 3 eingeschoben ist und die Arbeitsendstellung erreicht hat ebenso wie der Hydraulikkolben der Verschiebeeinrichtung 13. In der Probenausstoßstellung wird das Probegut bzw. das geschopfte Walzgut aufgrund der Zentrifugalkraft entlang einer nach außen geneigten Innenwandung des hohlzylindrischen Messerträgers in die ortsfeste Entnahmekammer 28 geschleudert, die Teil des Scherengehäuses 1 ist, und kann nach Öffnen der Entnahmeklappe 29 aus der Entnahmekammer 28 entfernt werden.

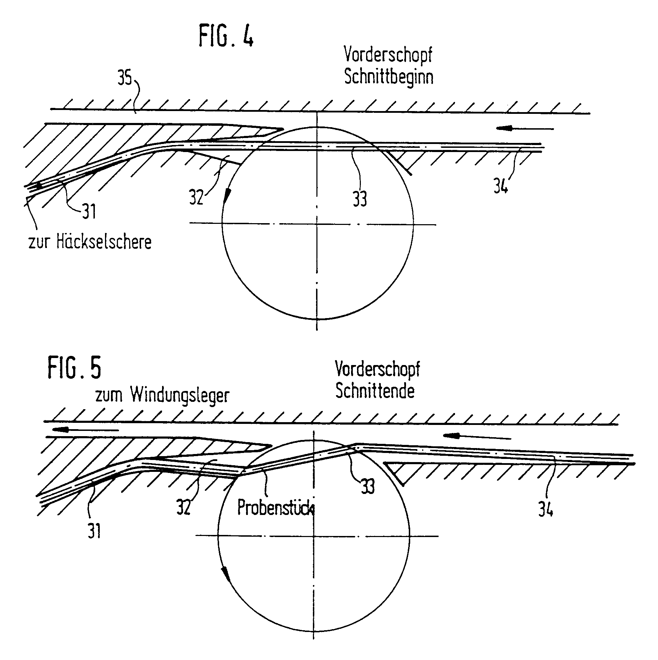

Figur 4 und Figur 5 zeigen eine axiale Seitenansicht entlang der Linie IV-IV in Figur 2 und zwar bei Schnittbeginn für den Forderschopf (Figur 4) bzw. für das Schnittende des Vorderschopfes (Figur 5) eines Walzdrahtes.

Erkennbar ist, daß von den rotierenden Ringmessern in der vorliegenden Betriebssituation nach Figur 4 von dem Walzdraht ein Vorderschopf 31 abgetrennt wird, der in einen zu einer nicht näher dargestellten Häckselschere führenden Häckselschacht 32 eingeführt ist. Ein weiteres Walzgutstück, das für eine Probeentnahme gedacht sein kann, wird entlang einer zwischen den Ringmessern 4, 5 gezogenen Sekante als Probegut 33 herausgestanzt und gelangt, wie zu Figur 3 beschrieben, in die stationäre Entnahmekammer 28 des Scherengehäuses 1. Der geschopfte Walzdraht 34 läuft auf die sich drehende Messertrommel 3 auf (vergleiche Figur 3) und wird von der Außenwandung 7 der Messertrommel in den zu einem nicht näher dargestellten Windungsleger geführten Drahtkanal 35 angehoben und in diesen eingeführt. Die Betriebssituation während des Herausstanzens des Probegutes 33 aus dem Walzdraht ist in Figur 5 dargestellt. Die rotierenden Ringmesser 4, 5, deren Umfangsgeschwindigkeit mit der hohen Walzdrahtgeschwindigkeit unter Berücksichtigung der erforderlichen Voreilung annähernd gleich ist, drücken beim Herausstanzen des Probegutes den Draht in Richtung der Messerrotation leicht nach unten in den Häckselschacht 32. Es ist also keine verstellbare Weiche erforderlich, so daß die Trommelstanzschere mit großer Genauigkeit und mit hoher Zuverlässigkeit arbeiten kann.

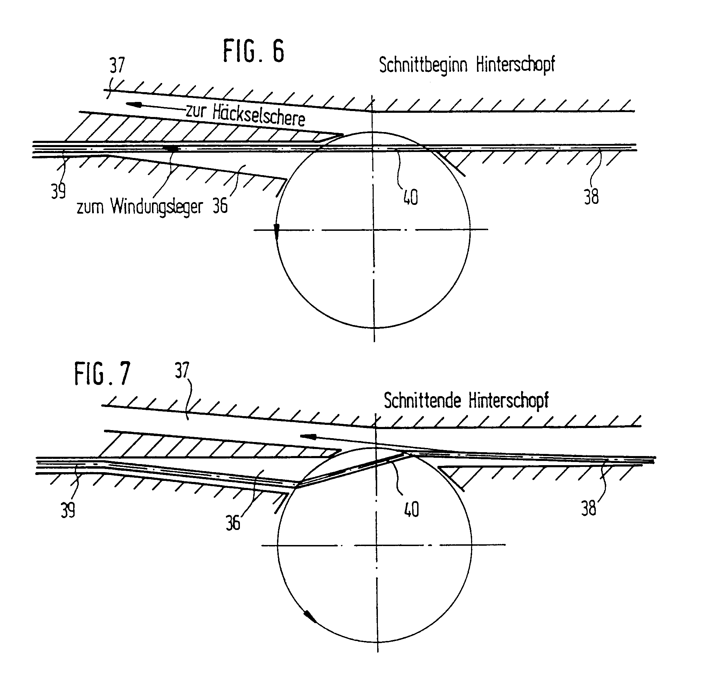

In Figur 6 und Figur 7 ist ebenfalls die axiale Seitenansicht entlang der Linie IV-IV in Figur 2 dargestellt diesmal jedoch bei Schnittbeginn für den Hinterschopf des Walzdrahtes (Fig. 6) und für das Schnittende des Hinterschopfs (Fig. 7).

Gemäß Figur 6 läuft der Walzdraht an den Ringmessern 4, 5 sekantenförmig vorbei in den Drahtkanal 36, der zu dem nicht näher dargestellten Windungsleger führt. Oberhalb des Drahtkanals 36 ist der Häckselschacht 37 zu sehen, der zu der ebenfalls nicht näher dargestellten Häckselschere führt. Wird das Walzdrahtende gemäß Figur 7 geschopft, so läuft das geschopfte Ende - wie in Figur 3 dargestellt - auf die Außenwandung 7 der Messertrommel auf und wird von dieser angehoben und in den Häckselschacht 37 eingeführt. Infolge des Rotationsschnittes wird der Draht leicht in Richtung der Rotationsrichtung der Ringmesser nach unten gedrückt. Deutlich ist das von den Ringmessern aus dem Walzdraht herausgestanzte Probegut 40 zu sehen, welches - wie zu Figur 3 beschrieben - in die Entnahmekammer 28 des Scherengehäuses 1 geschleudert wird. Das Probegut muß nicht immmer der Länge der Sekante zwischen den Schnittpunkten der Ringmesser entsprechen. Es kann unter Umständen eine sehr kurze Schopflänge erwünscht sein, um die Materialverluste bei hochwertigen Walzdrähten gering zu halten. Je nach gewünschter Schopflänge wird dann der Steuerbefehl zur Axialbeschleunigung der beweglichen Messertrommel 3 durch den Krafterzeuger 14, 15 gegeben. Insbesondere bei einem hochenergetisch vorgespannten Krafterzeuger bspw. mittels einer vorgespannten Feder lassen sich sehr kurze Beschleunigungszeiten für die Axialbewegung der Messertrommel erzielen, so daß der Walzdraht trotz seiner sehr hohen Walzgeschwindigkeit nur an einer Schnittstelle zwischen den Ringmessern 4, 5 durchtrennt wird.

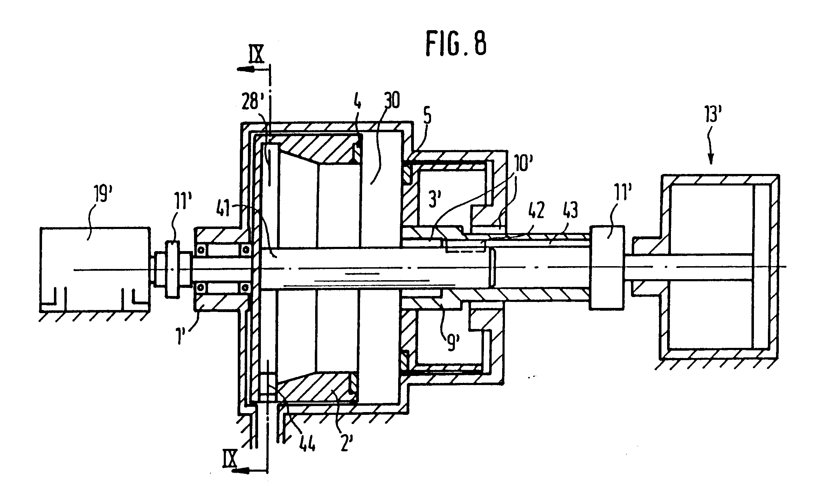

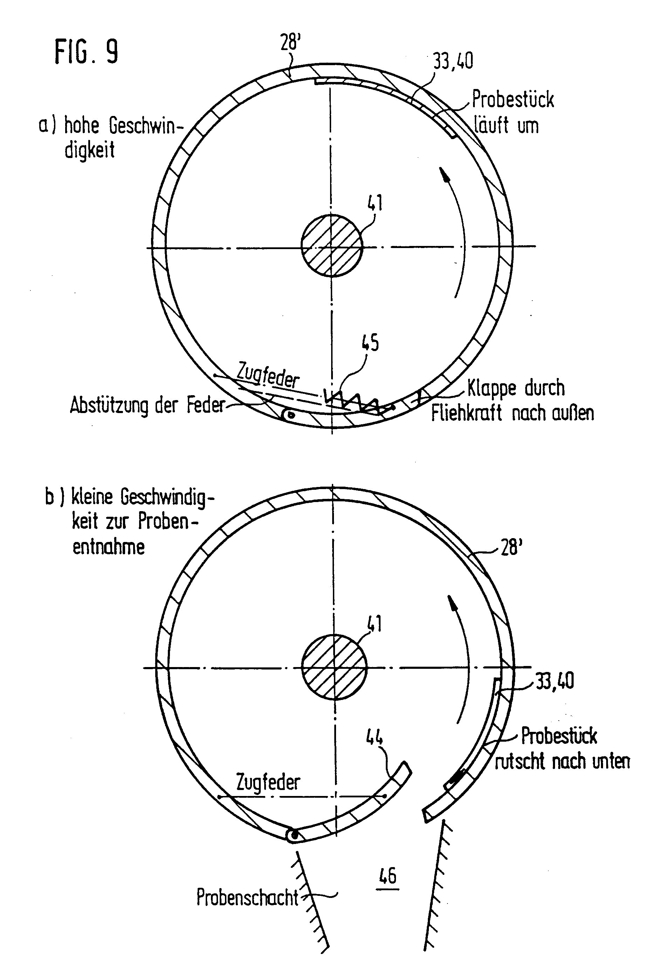

Figur 8 zeigt eine Variante der Trommelstanzschere, bei der der hohlzylindrische Messerträger 2' in dem Scherengehäuse 1' eine Trägerwelle 41 aufweist. Die Trägerwelle 41 ist in eine hohle Trommelwelle 9' eingeschoben, auf der die Messertrommel 3' befestigt ist. Die hohle Trommelwelle 9' ist mit der Trägerwelle 41 axial verschieblich aber drehfest dadurch verbunden, daß am Ende der Trägerwelle 41 eine Paßfeder 42 angeordnet ist, die in einer in der Trommelhohlwelle 9' eingelassenen in Achsrichtung verlaufenden Paßfedernut 43 eingreift. Die Lagerung der Trommelhohlwelle im Scherengehäuse erfolgt durch Gleitlager; die axiale Abstützung der Trommelhohlwelle erfolgt in dem Axiallager 11'. Die Verschiebung der Messertrommel 3' in den Messerträger 2' zum Zwecke des Schnittes des Walzdrahtes 30 erfolgt mit Hilfe der Verschiebeeinrichtung 13'. Der Antrieb von Messerträger 2' und Trommelmesser 3' erfolgt durch einen außerhalb des Scherengehäuses angeordneten Antriebsmotor 19'. Die Synchronisation der Rotation von Messerträger 2' und Trommelmesser 3' erfolgt - wie zuvor beschrieben - durch die Verbindung von Messerträgerwelle 41 und hohler Trommelwelle 9' mit Hilfe der Paßfeder 41 und der Paßfedernut 43. In dem Messerträger 2' ist die Entnahmekammer 28' integriert. Dies erfordert eine gesonderte Ausgestaltung für die Entnahmeklappe 29', die in Figur 9 dargestellt ist.

Figur 9a zeigt die ringförmige Entnahmekammer 28' und ein Stück Probegut 33, 40, welches von den Ringmessern 4', 5' aus dem Walzdraht herausgestanzt wurde und wegen der Rotation der Kammer an deren Wandung anliegt. Die Entnahmekammer hat eine schwenkbar ausgelegte Öffnungsklappe 44, die von der Zentrifugalkraft gegen die Kraft einer Zugfeder 45 während des Betriebes geschlossen bleibt, wobei die Zugfeder außen an der Entnahmekammer angeordnet ist. Zur Entnahme des Probegutes aus der rotierenden Entnahmekammer 28' wird die Drehzahl des Antriebsmotors 19' heruntergefahren; damit wird auch die Rotation des Messerträgers und der integrierten Entnahmekammer gegebenenfalls bis zum Stillstand zurückgenommen. Figur 9b zeigt, daß in diesem Betriebszustand die Öffnungsklappe 44 von der Zugfeder 45 geöffnet wird, und das Probegut 33, 40 von der Innenwandung der Entnahmekammer 28' in einen Entnahmeschacht 46 für das Probegut gelangen kann.

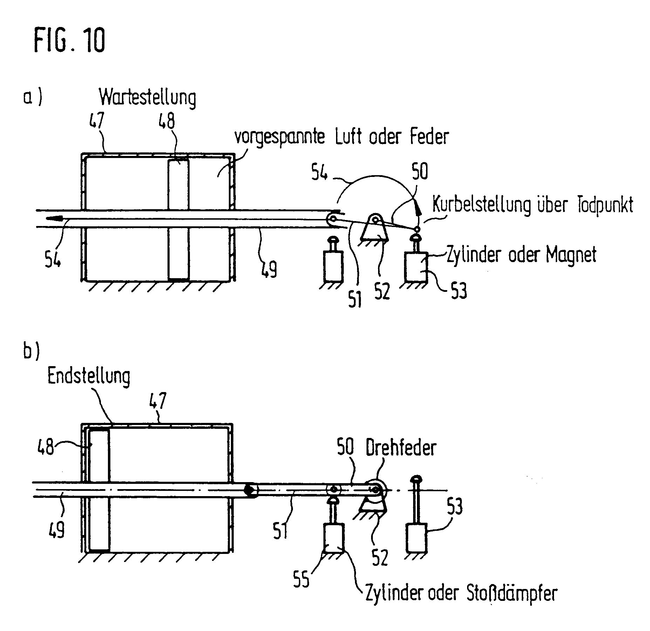

In Figur 10 ist als Verschiebeeinrichtung ein vorgespannter Krafterzeuger in einer Wartestellung a.) und in einer Endstellung b.) gezeigt.

Die Wartestellung gemäß Figur 10a zeigt einen Kraftzylinder 47 und einen Zylinderkolben 48 mit einer Kolbenstange 49, wobei der Zylinderkolben gegen Luft, gegen ein anderes geeignetes gasförmiges Medium oder gegen eine mechanische Feder vorgespannt ist. Die Vorspannung erfolgt dadurch, daß am Ende der Kolbenstange ein Kurbelsystem mit einer Übertodpunktstellung angreift. Das Kurbelsystem besteht aus zwei Lenkerstäben 50, 51, wobei der Lenkerstab 50 drehfedergelagert in einem Lagerblock 52 gehalten ist. Der Lenkerstab 51 verbindet das andere Ende des Lenkerstabes 50 gelenkig mit der Kolbenstange 49. In der Wartestellung wird das Kurbelsystem über den Todpunkt gedreht und bspw. durch den Magneten 53 in seiner Stellung festgehalten und gesichert. Wird von dem Sicherungsmagnet 53 die Übertodpunktstellung des Kurbelsystems verändert (vergleiche Figur 10b) dann wird der bspw. gegen komprimierte Luft vorgespannte Kolben 48 des Krafterzeugers explosionsartig in Richtung des Bewegungspfeiles 54 in die Endstellung bewegt. Die Endstellung wird dadurch abgefedert, daß bspw. der Lenkerstab 50 gegen einen Stoßdämpfer 55 schlägt. Anschließend wird das Kurbelsystem von der im Lagerbock 52 angeordneten Drehfeder in die Ausgangsstelle, d. h. in die Übertodpunktstellung (Fig. 10a) zurückgedreht. Wie zuvor erläutert kann die hochenergetische Vorspannung des Krafterzeugers hydraulisch, pneumatisch oder durch eine vorgespannte Feder erfolgen. Es ist allerdings auch denkbar, daß in den Zylinderraum des Krafterzeugers ein Gasgemisch eingeleitet wird, welches entzündet werden kann. Denkbar ist auch ein Motorantrieb über eine Zahnstange, ein Motorantrieb über einen Kurbeltrieb oder einen Kniehebel, von dem die Messertrommel der Trommelstanzschere sehr schnell auf den Messerträger zu und in diesen hineinbewegt wird.

### Liste der Bezugszeichen

- 1, 1': Scherengehäuse
- 2, 2': Messerträger
- 3, 3': Messertrommel
- 4, 4': Ringmesser der Messerträger
- 5, 5': Ringmesser der Messertrommel
- 6: Wandung der Messerträger
- 7: Außenwandung der Messertrommel
- 8: Radiallager
- 9, 9': Trommelwelle
- 10: Gleitlager
- 11: Axiallager
- 12: Kolbenstange
- 13, 13': Verschiebeeinrichtung
- 14: Hydraulikkolben
- 15: Hydraulikzylinder
- 16: Vorgelege
- 17: Getriebewelle
- 18: Kupplung
- 19, 19': Antriebsmotor
- 20: Ritzel
- 21: Ritzel
- 22: Außenverzahnung
- 23: Stirnrad
- 24: Nabe
- 25: Mitnahmekeil
- 26: Mitnahmenut
- 27: Radiallager
- 28, 28': Entnahmekammer
- 29, 29': Entnahmeklappe
- 30: Walzgut, Walzdraht
- 31: Vorderschopf
- 32: Häckselschacht
- 33: Probegut
- 34: geschopfter Walzdraht
- 35: Drahtkanal
- 36: Drahtkanal
- 37: Häckselschacht
- 38: Hinterschopf
- 39: geschopfter Walzdraht
- 40: Probegut
- 41: Trägerwelle
- 42: Paßfeder
- 43: Paßfedernut
- 44: Öffnungsklappe
- 45: Zugfeder
- 46: Entnahmeschacht
- 47: Kraftzylinder
- 48: Zylinderkolben
- 49: Kolbenstange
- 50: Lenkerstab
- 51: Lenkerstab
- 52: Lagerbock
- 53: Magnet
- 54: Bewegungspfeil
- 55: Stoßdämpfer

## Patentansprüche

1. Rotierende Schopf- und Probenahmeschere für Walzgut, insbesondere für Draht- und/oder Stabstahl-Walzstraßen mit hohen Walzgeschwindigkeiten für den Draht bzw. für den Stabstahl, mit rotierbar angeordneten, zylindrisch ausgebildetem Messerträger (2) mit einem Ringmesser (4), dessen Messerschneide mit der zylindrischen Wandung (6) umläuft und mit einer von dem Messertrager (2,2') beabstandeten, rotierbar angeordneten Messertrommel (3,3') mit einem am Außenumfang (7) angeordneten Ringmesser (5), dessen Messerschneide entlang der Trommelaußenwandung verläuft, wobei im Abstandsbereich zwischen Messerträger (2) und Messertrommel (3,3') das Walzgut (30) geführt ist und mit einer Verschiebeeinrichtung (13) für Messerträger (2) bzw. Messertrommel (3),
**dadurch gekennzeichnet,**
daß der Messerträger (2,2') und die Messertrommel (3) in einem Scherengehäuse (1) angeordnet sind, daß die Rotationsebenen von Messerträger (2,2') und Messertrommel (3) zueinander parallel sind, daß der Messerträger (2,2') hohlzylindrisch ausgebildet ist, daß der Außendurchmesser der Messertrommel (3,3') geringfügig kleiner bemessen ist als der Innendurchmesser des hohlzylindrischen Messerträgers (2,2') und daß die Messertrommel (3,3') von der Verschiebeeinrichtung (13) in den Hohlzylinder des Messerträgers (2,2') bewegbar ist und daß der Hohlzylinder des Messerträgers (2,2') mit einer Entnahmekammer (28,28')für vom Walzgutstrang geschopfte Enden bzw. aus diesem herausgetrenntes Probegut (33, 40) in Verbindung steht.

2. Walzgutschere nach Anspruch 1,
**dadurch gekennzeichnet,**
daß die Rotation von Messerträger (2) und Messertrommel (3) synchronisierbar ist und die Umfangsgeschwindigkeit der Ringmesser (4, 5) etwa auf die Walzgeschwindigkeit einstellbar ist.

3. Walzgutschere nach Anspruch 1 oder 2,
**dadurch gekennzeichnet,**
daß die Verschiebeeinrichtung (13) für die Messertrommel (3) mit einem hochenergetisch vorspannbaren Krafterzeuger (47, 48) in Verbindung steht.

4. Walzgutschere nach mindestens einem der Ansprüche 1 bis 3,
**dadurch gekennzeichnet,**
daß die Entnahmekammer (28) Teil des Scherengehäuses (1) ist.

5. Walzgutschere nach mindestens einem der Ansprüche 1 bis 4,
**dadurch gekennzeichnet,**
daß die Entnahmekammer (28') Teil des rotierenden Messerträgers (2') ist.

6. Walzgutschere nach mindestens einem der Ansprüche 1 bis 5,
**dadurch gekennzeichnet,**
daß Messerträger (2) und Messertrommel (3) mechanisch mittels eines Vorgeleges (16) synchronisiert sind, dessen eines Ritzel (20) in eine Außenverzahnung (22) des Messerträgers (2) und dessen anderes Ritzel (21) mit einem Stirnrad (23) kämmt, in dessen Nabe (24) die Welle (9) der Messertrommel (3) drehfest aber axial verschieblich gehalten ist.

7. Walzgutschere nach mindestens einem der Ansprüche 1 bis 5,
**dadurch gekennzeichnet,**
daß die Welle (41) des hohlzylindrischen Messerträgers (2') zumindest teilweise in eine die Messertrommel (3') tragende Hohlwelle (9') axial fluchtend hineinragt und die Hohlwelle (9') mit der Messerträgerwelle (41) drehfest aber verschieblich verbunden ist.

8. Walzgutschere nach mindests einem der Ansprüche 1 bis 4,
**dadurch gekennzeichnet,**
daß der hohlzylindrische Messerträger (2) im Scherengehäuse (1) in Wälzlagern (8) dreht und die axial verschiebbare Messertrommel (3) in Gleitlagern (10) gehalten ist.

9. Walzgutschere nach mindestens einem der Ansprüche 1 bis 8,
**dadurch gekennzeichnet,**
daß das Walzgut (30) bezogen auf die Rotationsebene der Ringmesser (4, 4', 5, 5') von Messerträger (2, 2') und Messertrommel (3, 3') entlang einer Kreissekante geführt und an mindestens an einer Schnittstelle trennbar ist.

10. Walzgutschere nach mindestens einem der Ansprüche 1 bis 9,
**dadurch gekennzeichnet,**
daß das Schnittende des Vorderschopfes (31) bzw. des Hinterschopfes (38) des Walzgutes auf der Außenwandung (7) der Messertrommel (3, 3') aufliegt und von dieser in den Drahtkanal (35, 36) zum Windungsleger bzw. in den Häckselschacht (32, 37) zur Häckselschere einbringbar ist.

11. Walzgutschere nach mindestens einem der Ansprüche 1 bis 10,
**dadurch gekennzeichnet,**
daß an der Entnahmekammer (28') des rotierenden Messerträgers (2') eine zugfederbelastete von der Zentrifugalkraft schließbare Entnahmeklappe (29') angeordnet ist.

12. Walzgutschere nach mindestens einem der Ansprüche 1 bis 11,
**dadurch gekennzeichnet,**
daß der Krafterzeuger (47, 48) für die Verschiebeeinrichtung (13) der Messertrommel (3, 3') ein auf die Trommelwelle (9, 9') axial wirkender Hydraulik bzw. Pneumatikkolben mit Bewegungsdämpfung (55) oder ein mechanisch wirkender Kurbel- bzw. Kniehebel ist.

## Claims

1. Rotary cropping and sampling shears for roll stock, especially for wire and/or steel rod roll trains with high rolling speeds for the wire or for the steel rod, comprising a rotatably arranged, cylindrically constructed knife carrier (2) with an annular knife (4), the blade edge of which rotates with the cylindrical wall (6), a rotatably arranged knife drum (3, 3') spaced from the knife carrier (2, 2') and comprising an annular knife (5) which is arranged at the outer circumference (7) and the blade edge of which extends along the drum outer wall, wherein the roll stock (30) is led into the spacing region between knife carrier (2) and knife drum (3, 3'), and a displacing device (13) for knife carrier (2) and knife drum (3), characterised thereby that the knife carrier (2, 2') and the knife drum (3) are arranged in a shears housing (1), that the planes of rotation of knife carrier (2, 2') and knife drum (3) are parallel to one another, that the knife carrier (2, 2') is constructed to be hollow cylindrical, that the outer diameter of the knife drum (3, 3') is dimensioned to be slightly smaller than the inner diameter of the hollow cylindrical knife carrier (2, 2'), that the knife drum (3, 3') is movable by the displacing device (13) into the hollow cylinder of the knife carrier (2, 2') and that the hollow cylinder of the knife carrier (2, 2') stands in connection with a removal chamber (28, 28') for ends cropped from the roll stock strand or sample stock separated from this.

2. Roll stock shears according to claim 1, characterised thereby that the rotation of knife carrier (2) and knife drum (3) is synchronisable and the circumferential speed of the annular knife (4, 5) is settable approximately to the rolling speed.

3. Roll stock shears according to claim 1 or 2, characterised thereby that the displacing device (13) for the knife drum (3) stands in connection with a high-energy prestressable force generator (47, 48).

4. Roll stock shears according to at least one of claims 1 to 3, characterised thereby that the removable chamber (28) is part of the shears housing (1).

5. Roll stock shears according to at least one of claims 1 to 4, characterised thereby that the removal chamber (28') is part of the rotary knife carrier (2').

6. Roll stock shears according to at least one of claims 1 to 5, characterised thereby that knife carrier (2) and knife drum (3) are mechanically synchronised by means of a gear transmission (16), the one pinion (20) of which meshes in an outer toothing (22) of the knife carrier (2) and the other pinion (21) of which meshes with a gearwheel (23), in the hub (24) of which the shaft (9) of the knife drum (3) is held to be secure against rotation, but axially displaceable.

7. Roll stock shears according to at least one of claims 1 to 5, characterised thereby that the shaft (41) of the hollow cylindrical knife carrier (2') projects axially aligned at least partly into a hollow shaft (9') carrying the knife drum (3') and the hollow shaft (9') is connected with the knife carrier shaft (41) to be rotationally secure, but slidable.

8. Roll stock shears according to at least one of claims 1 to 4, characterised thereby that the hollow cylindrical knife carrier (2) rotates in the shears housing (1) in roller bearings (8) and the axially displaceable knife drum (3) is held in plain bearings (10).

9. Roll stock shears according to at least one of claims 1 to 8, characterised thereby that the roll stock (30) is lead along a secant of a circle with respect to the plane of rotation of the annular knife (4, 4', 5, 5') of knife carrier (2, 2') and knife drum (3, 3') and can be severed at at least one cutting location.

10. Roll stock shears according to at least one of claims 1 to 9, characterised thereby that the cut end of the front topping (31) or of the rear topping (38) of the roll stock bears on the outer wall (7) of the knife drum (3, 3') and is introduceable by this onto the wire channel (35, 36) to the coil layering device or into the chopping shaft (32, 37) to the chopping shears.

11. Roll stock shears according to at least one of claims 1 to 10, characterised thereby that a spring-loaded removal flap (29') is arranged at the removal chamber (28') of the rotary knife carrier (2').

12. Roll stock shears according to at least one of claims 1 to 11, characterised thereby that the force generator (47, 48) for the displacing device (13) of the knife drum (3, 3') is a hydraulic or pneumatic piston, which acts axially on the drum shaft (9, 9'), with movement damping (55) or a mechanically acting crank lever or toggle lever.

## Revendications

1. Cisaille rotative à ébouter et échantillonner pour des produits laminés, en particulier pour des laminoirs à fil et/ou à acier en barres présentant des vitesses de laminage élevées pour le fil ou pour l'acier en barres, constituée par un porte-lame (2) cylindrique rotatif comportant une lame annulaire (4), dont le tranchant tourne avec la paroi cylindrique (6) et par un tambour porte-lame (3, 3') rotatif disposé à une certaine distance du porte-lame (2, 2') et présentant une lame annulaire (5) disposée sur le périmètre extérieur (7) dont le tranchant s'étend le long de la paroi extérieure du tambour, le produit laminé (30) étant guidé entre le porte-lame (2) et le tambour porte-lame (3, 3'), et par un dispositif de déplacement (13) pour le porte-lame (2) ou le tambour porte-lame (3), caractérisée en ce que le porte-lame (2, 2') et le tambour porte-lame (3) sont disposés dans un bâti (1) de cisaille, en ce que les plans de rotation du porte-lame (2, 2') et du tambour porte-lame (3) sont parallèles l'un par rapport à l'autre, en ce que le porte-lame (2, 2') est exécuté sous forme d'un cylindre creux, en ce que le diamètre extérieur du tambour porte-lame (3, 3') est légèrement inférieur au diamètre intérieur du porte-lame (2, 2') à cylindre creux et en ce que le tambour porte-lame (3, 3') peut être déplacé par le dispositif de déplacement (13) dans le cylindre creux du porte-lame (2, 2') et en ce que le cylindre creux du porte-lame (2, 2') est relié à une chambre de prélèvement (28, 28') pour les extrémités éboutées du produit laminé ou pour les échantillons (33, 40) prélevés dudit produit laminé.

2. Cisaille rotative pour produits laminés selon la revendication 1, caractérisée en ce que la rotation du porte-lame (2) et celle du tambour porte-lame (3) peuvent être synchronisées et en ce que la vitesse périphérique des lames annulaires (4, 5) peut être réglée en fonction de la vitesse de laminage.

3. Cisaille rotative pour produits laminés selon la revendication 1 ou 2, caractérisée en ce que le dispositif de déplacement (13) pour le tambour porte-lame (3) est relié à un générateur d'énergie (47, 48) puissant pouvant être précontraint.

4. Cisaille rotative pour produits laminés selon au moins une quelconque des revendications 1 à 3, caractérisée en ce que la chambre de prélèvement (28) est une partie du bâti (1) de la cisaille.

5. Cisaille rotative pour produits laminés selon au moins une quelconque des revendications 1 à 4, caractérisée en ce que la chambre de prélèvement (28') est une partie du porte-lame (2') rotatif.

6. Cisaille rotative pour produits laminés selon au moins une quelconque des revendications 1 à 5, caractérisée en ce que le porte-lame (2) et le tambour porte-lame (3) sont synchronisés mécaniquement via un engrenage intermédiaire (16) dont un pignon (20) s'engrène dans une denture extérieure (22) du porte-lame (2) et dont l'autre pignon (21) s'engrène dans une roue droite (23) dont le moyeu (24) maintient l'arbre (9) du tambour porte-lame (3) de manière à ce qu'il ne puisse pas tourner mais à ce qu'il puisse être déplacé axialement.

7. Cisaille rotative pour produits laminés selon au moins une quelconque des revendications 1 à 5, caractérisée en ce que l'arbre (41) du porte-lame (2') à cylindre creux pénètre au moins partiellement et de manière axialement aligné dans une arbre creux (9') supportant le tambour porte-lame (3') et en ce que l'arbre creux (9') est relié à l'arbre (41) du porte-lame de manière à ce qu'il ne puisse pas tourner mais à ce qu il puisse être déplacé axialement.

8. Cisaille rotative pour produits laminés selon au moins une quelconque des revendications 1 à 4, caractérisée en ce que le porte-lame (2) à cylindre creux tourne dans le bâti (1) de la cisaille dans des paliers de laminage (8) et en ce que le tambour porte-lame (3) pouvant être déplacé axialement est maintenu dans des paliers de glissement (10).

9. Cisaille rotative pour produits laminés selon au moins une quelconque des revendications 1 à 8, caractérisée en ce que le produit laminé (30) est guidé le long d'un côté d'un cercle par rapport au plan de rotation des lames annuaires (4, 4', 5, 5') du porte-lame (2, 2') et du tambour porte-lame (3, 3') et en ce qu il peut être coupé en au moins une intersection.

10. Cisaille rotative pour produits laminés selon au moins une quelconque des revendications 1 à 9, caractérisée en ce que l'extrémité de coupe du bout avant (31) ou du bout arrière (38) du produit laminé est placé sur la paroi extérieure (7) du tambour porte-lame (3, 3') et en ce qu'il peut être introduit par celui-ci dans le conduit à fil (35, 36) vers l'embobineuse ou dans le conduit (32, 37) vers la cisaille à mitrailles.

11. Cisaille rotative pour produits laminés selon au moins une quelconque des revendications 1 à 10, caractérisée en ce qu'on a disposé dans la chambre de prélèvement (28') du porte-lame (2') rotatif un clapet de prélèvement (29') soumis à un ressort de traction et pouvant être fermé par la force centrifuge.

12. Cisaille rotative pour produits laminés selon au moins une quelconque des revendications 1 à 11, caractérisée en ce que le générateur d'énergie (47, 48) pour le dispositif de déplacement (13) du tambour porte-lame (3, 3') est un piston hydraulique ou pneumatique agissant axialement avec un amortisseur de mouvement (55) ou un levier à manivelle ou à grenouillère sur l'arbre du tambour (9, 9').
